Europäisches Patentamt

European Patent Office

Office européen des brevets

(11) Publication number: 0 346 054
A1

# (12) EUROPEAN PATENT APPLICATION

(21) Application number: 89305670.5

(22) Date of filing: 06.06.89

(51) Int. Cl.4: **C09J 3/14** , **C08L 31/02** , **B32B 21/08** , //(C08L31/02, 75:04)

(30) Priority: 08.06.88 GB 8813550

(43) Date of publication of application:
13.12.89 Bulletin 89/50

(84) Designated Contracting States:
AT BE CH DE ES FR GB GR IT LI NL SE

(71) Applicant: **UNILEVER PLC**
**Unilever House Blackfriars P.O. Box 68**
**London EC4P 4BQ(GB)**

(84) **GB**

Applicant: **UNILEVER NV**
**Burgemeester s'Jacobplein 1 P.O. Box 760**
**NL-3000 DK Rotterdam(NL)**
(84) **BE CH DE ES FR GR IT LI NL SE AT**

(72) Inventor: **Clark, Nigel Leslie**
**70 Wilmot Way**
**Banstead Surrey, SM7 2QD(US)**
Inventor: **Fairless, Joe**
**Beckersweg 29**
**NL-6261 NX Mheer(NL)**

(74) Representative: **Roscoe, Brian Corrie et al**
**UNILEVER PLC Patents Division P.O. Box 68**
**Unilever House**
**London EC4P 4BQ(GB)**

(54) Adhesive compositions.

(57) A copolymer base for adhesive compositions is vinyl: acetate/ethylene emulsions. The bond strength of such adhesives can be improved by adding fully reacted polyurethane dispersions having no free isocyanate groups.

EP 0 346 054 A1

## ADHESIVE COMPOSIITONS

FIELD OF THE INVENTION:

This invention relates to adhesive compositions comprising copolymer emulsions of vinyl C1 to C3 alkanoates, especially vinyl acetate, and C2 to C4 ethylenic hydrocarbons, especially ethylene. These adhesive compositions are of value in laminating plastics material, in particular forming laminates from polyvinyl chloride (PVC) sheets and wooden structural sheets, for example chipboard. These laminated sheets are usable in the manufacture of furniture.

BACKGROUND TO THE INVENTION:

Adhesive compositions comprising a copolymer emulsion of, for example vinyl acetate and ethylene, are used in lamination processes. Adhesives of this type are required to provide stable adhesion when utilised over a range of temperatures. They must also be resistant to the effect of plasticiser migrating from the PVC films.

The compositions may additionally contain other components, for example fillers, surfactants, solvents, tackifying resins, plasticisers, dispersants and antifoam agents.

GENERAL DESCRIPTION OF THE INVENTION:

The invention provides adhesive compositions comprising
i) from about 20% to about 70% of emulsion copolymer solids of vinyl C1 to C3 alkanoate with from about 5% to about 35% by weight of C2 to C4 ethylenic hydrocarbon, and
ii) from about 1.0% to about 4.0% by weight of polyurethane solids based on the copolymer (i) solids. The polyurethane component is added as a dispersion in a predominantly aqueous medium. It is a fully reacted polyurethane containing no isocyanate groups.

Preferably, the amount of ethylenic hydrocarbon in the copolymer is about 10% and preferably up to about 30%.

The preferred vinyl alkanoate is vinyl acetate but vinyl propionate is also usable. Ethylene is the preferred hydrocarbon monomer but butylene and isobutene can be used.

Methods for preparing the copolymer emulsions of the invention are well characterised in the literature. Polymer Synthesis (vols I and II) by Sandler and Karo (Academic Press 1974) and Preparative Methods of Polymer Chemistry (2nd Ed) by Sorenson & Campbell (Interscience 1968) provide preparative information. Methoden der Organischen Chemie (Houben-Weyl) Band XIV published by Georg Thieme Verlag Stuttgart (1961) also provides preparative descriptions.

The adhesive compositions of the present invention provide satisfactory bonding while containing fewer components than commercially available compositions. The presence of polyurethanes improves the bond strength of the resulting films.

TEST METHODS

The properties of the resultant adhesive composition were measured by the following procedures.
i) Adhesion was visually estimated on the qualitative comparative scale Very Poor, Poor, Fair, Good, Quite Good, Very Good and Excellent by hand peeling laminates of chipboard to furniture quality PVC film made using the adhesive under test.
The visual estimates were:-
Excellent - lifting of chips over whole peeled area, i.e. destruction of chipboard surface.
Very Good - chip lift over most of area peeled with slight cohesive failure.
Quite Good - some chip lift and extensive cohesive failure with high bond strength.
Good - strong bond with no chip lift and no loss of adhesion.

Fair - moderate bond strength and some loss of adhesion to PVC.

Poor - weak bond with extensive loss of adhesion to PVC.

Very Poor - very weak bond with total loss of adhesion to one or both substrates.

ii) The creep of the bond between PVC sheet and chipboard was measured by placing prepared laminates (25cm x 5 cm), applied at a coating weight of 70g/sqm, on supports, horizontally and upside down in a preheated oven at 77° C.

The rate at which a 100g weight attached to a 5cm side of the PVC laminated sheet was able to remove the PVC foil was determined and result expressed in mm/min.

ii) Adhesion for Examples IV, V & VI was measured using an Instron device. A layer (ca 0.1 mm thick) of the adhesive composition was spread on a plywood based (18cm X 3.3cm) and a D388 PVC strip (31 cm X 2.54 cm) laid over it with an extension over one end of the plywood. Hand pressure was applied. Six samples were made and then subjected to 2 kg weight between glass sheets for 24 hours & 2 hours at 20° C/65% relative humidity. After ageing for one week the samples were tested on an Instron machine at a cross head speed of 12.5 mm/min for 180° peel strength with results expressed in Newtons.

The type of failure during Instron peeling and subsequent snatch 180° hand peel is assessed subjectively. The results are expressed as average of three determinations. This method is applied at 20° C.

iv) Adhesion at 5° C and -20° C for examples IV, V & VI was measured using procedure (iii). The samples were prepared with the PVC extending over each end of the plywood. The laminates were aged for 48 hrs at 20° C/65% relative humidity and then for 48 hrs at 5° C and -20° C. The adhesion was assessed subjectively at these temperatures by slow and snatch 180° C hand peeling.

v) Hot peel (70° C) adhesion for examples IV, V & VI was tested using a peel test which gave a measure of rate of peel in mm/10 minutes. Three samples were prepared as in method (iii) and left for a further 4 days at 20° C/65% RH after removing weight. Each sample was snapped after scoring the PVC, and the PVC peeled back 1" from end and hook attached to the end. The position to which the PVC had been peeled was marked.

The samples were suspended in a 70° C oven and left for 5 minutes. A 200 g weight was the attached to the peel back PVC so that it was being peeled down at 180°. The distance (mms) peeled in 10 minutes is a measure of the bond strength; this is obtained by direct measurement or by extrapolation if the band is peeled off completely in 10 minutes.

## SPECIFIC DESCRIPTION OF THE INVENTION:

Examples of the invention will now be given to illustrate but not limit the invention.

## EXAMPLES I, II & III

A commercially available vinyl acetate (83%)/ethylene (17%) copolymer was used in the form of 55% w/w aqueous dispersion. The dispersion was stabilised with polyvinyl alcohol and the copolymer had a THF solubility of about 50%.

This emulsion was then used as an ingredient in three adhesives having the compositions and properties quoted in Table 1.

Polyurethane dispersion A had a solids content of 40% aq, a viscosity (20° C) of about 20mPa.s, a pH between 7 and 9, Tensile strength of 8 to 12 MPa, elongation of 1000%, modulus (100%) 0.5 to 1.0MPa and modulus (300%) 1.0 to 1.5MPa.

Polyurethane dispersion B had a solids content of 40% aq, viscosity (25° C) of 30 mPa.s pH of 8.5, tensile strength 50Kg/cm², % Elongation of 950 and hardness (shore A) of 75°. It was an anionic polyurethane. Polyurethanes A & B were fully reacted and contained no free isocyanate groups.

Table I also includes composition X which is a typical example of a currently used laminating adhesive having several components additional to those required in the present invention.

## EXAMPLE IV

A commercially available vinyl acetate (83%)/ethylene (17%) copolymer was used in the form of a 55% w/w aq. dispersion. The dispersion was stabilised with a polyvinyl alcohol blend (88% hydrolysed) and had viscosity of 3000 m Pas.

Polyurethane dispersion C was anionic, fully reacted and contained free no isocyanate groups
60% w/w solids
pH of 7.8 at 25° C
viscosity of 600 cps at 25° C (Brookfield RVT)
surface tension 40 dynes/cn
Tensile strength MPa of 24
Ultimate elongate of 1000%
modulus at 100% MPa 2.

The properties of an adhesive containing a blend of this VA/E copolymer and polyurethane C is given in Table II.

EXAMPLE V (Comparison)

An adhesive composition based on the VA/E copolymer of Example IV was prepared as comparison.

EXAMPLE VI

An adhesive composition using polyurethane C and VA/E copolymer emulsion comparable to that in Example IV but with a viscosity of 6000 mPas was prepared.

TABLE I

| Composition | % by weight | | | |
|---|---|---|---|---|
| | X | I | II | III |
| Copolymer emulsion (55%) | 42.89 | 58.65 | 57.10 | 57.10 |
| Polyurethane A | nil | 1.57 | 1.55 | nil |
| Polyurethane B | nil | nil | nil | 2.86 |
| Antifoam | 0.21 | 0.17 | 0.16 | 0.16 |
| Dispersant | 1.52 | 1.23 | 1.20 | 1.20 |
| Calcium carbonate filler | 41.32 | 32.71 | 31.84 | 31.84 |
| DOSS | 1.57 | 1.23 | 1.20 | 1.20 |
| dibutyl phthalate | 4.30 | 3.19 | 5.75 | 5.75 |
| polyvinyl alcohol | 1.57 | 1.23 | 1.20 | 1.20 |
| GAFAC RE 610 | 0.26 | nil | nil | nil |
| Toluene | 2.10 | nil | nil | nil |
| Colophonium | 2.10 | nil | nil | nil |
| Ethylene glycol | 2.10 | nil | nil | nil |
| Properties: | | | | |
| Adhesion at ambient | VG | Exc | Exc | Exc |
| at minus 10° C | Good | Q.G | Exc | Exc |
| Creep at 77° C (mm/min) | 2.2 | 0.20 | 1.35 | 1.50 |
| DOSS is sodium dioctyl sulpho-succinate. Polyvinyl alcohol is GL05 (15% aq) obtainable from Nippon Gohsei of Japan. GAFAC RE 610 is a phosphate ester surfactant. | | | | |

4

TABLE II

| Composition | % by weight | | |
|---|---|---|---|
| | IV | V | VI |
| Copolymer emulsion | 56.89 | 58.65 | 56.89 |
| Polyurethane C | 1.76 | NIL | 1.76 |
| Antifoam | 0.16 | 0.16 | 0.16 |
| Dispersant (10% aq) | 1.20 | 1.20 | 1.20 |
| Calcium carbonate filler | 31.84 | 31.84 | 31.84 |
| DOSS (10% aq) | 1.20 | 1.20 | 1.20 |
| Dibutyl/phthalate | 5.75 | 5.75 | 5.75 |
| Polyvinyl alcohol (15% aq) | 1.2 | 1.2 | 1.20 |
| Properties: | | | |
| Adhesion at -20° C | Woodtear | Slight woodtear | Woodtear |
| +5° C | Woodtear | Woodtear | Woodtear |
| +20° C | 23.25N | 24.51N | 23.31N |
| +70° C | 234mms | 489mm | 156mm |

These results demonstrate the benefit in adhesive strength obtained with the use of a polyurethane containing no isocyanate groups.

The high strength of the bond is illustrated by the presence of woodtear, i.e. a tearing in one of the substrates.

**Claims**

1. An adhesion composition comprising:

i) from about 20% to about 70% of emulsion copolymer solids of vinyl C1 to C3 alkanoate with from about 5% to about 35% by weight of C2 to C4 ethylenic hydrocarbon, and

ii) from about 1.0% to about 4.0% by weight of polyurethane solids based on the copolymer (i) solids.

2. A laminate of polyvinyl chloride and wooden structural sheets adhered by the adhesive composition of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACT OF JAPAN, vol. 10, no. 4 (C-322)[2061], 9th January 1986; & JP-A-60 163 981 (SUMITOMO KAGAKU KOGYO K.K.) 26-08-1985 | 1 | C 09 J 3/14<br>C 08 L 31/02<br>B 32 B 21/08 //<br>(C 08 L 31/02<br>C 08 L 75:04 ) |
| | | | **TECHNICAL FIELDS SEARCHED (Int. Cl.4)**<br><br>C 09 J<br>C 08 L |

The present search report has been drawn up for all claims

| Place of search | Date of completion of the search | Examiner |
|---|---|---|
| THE HAGUE | 29-08-1989 | SCHUELER D.H.H. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)